# EUROPÄISCHE PATENTSCHRIFT

(11) **EP 1 155 584 B1**
(45) Veröffentlichungstag und Bekanntmachung des Hinweises auf die Patenterteilung: **30.01.2008**
(21) Anmeldenummer: 00916763.6
(22) Anmeldetag: 25.02.2000
(51) Int. Cl.: H04Q 7/32, H04Q 7/38

(54) **VERFAHREN ZUR STEUERUNG DER AUFTEILUNG VON ÜBERTRAGUNGSRATEN IN EINEM ZELLULAREN FUNK-TELEKOMMUNIKATIONSSYSTEM**
METHOD FOR CONTROLLING THE DIVISION OF TRANSFER RATES IN A CELLULAR RADIO TELECOMMUNICATIONS SYSTEM
PROCEDE DE COMMANDE DE LA REPARTITION DES TAUX DE TRANSFERT DANS UN SYSTEME DE TELECOMMUNICATIONS RADIO CELLULAIRE

(30) Priorität: 26.02.1999 DE 19908424
(43) Veröffentlichungstag der Anmeldung: 21.11.2001
(73) Patentinhaber: Siemens Enterprise Communications GmbH & Co. KG, 81379 München (DE)
(72) Erfinder: SCHULZ, Egon, D-80993 München (DE)
(74) Vertreter: Maier, Daniel Oliver
(86) Internationale Anmeldenummer: PCT/DE2000/000538
(87) Internationale Veröffentlichungsnummer: WO 2000/051377

(56) Entgegenhaltungen:
- WO-A-00/27051
- US-A- 4 748 681
- US-A- 5 613 213

## Beschreibung

Auf dem endgerätenahen Gebiet der Telekommunikation gewinnen Funkstrecken zunehmend an Bedeutung. Schnurlos-Telefone, Mobilfunkendgeräte und die drahtlose Anschlußtechnik "RLL" (Radio in the Local Loop) oder "WLL" (Wireless Local Loop) sind dafür bekannte Beispiele. Mit dem Ziel einen Standard für eine hochleistungsfähige und universelle Luftschnittstelle festzulegen, wurde auf Betreiben europäischer Unternehmen eine als "DECT" (Digital Enhanced (früher: European) Cordless Telecommunication) bekannte Luftschnittstelle definiert. Der DECT-Standard ist in den Dokumenten ETS (European Telecommunication Standard) 300 175-1, ...,9. Oktober 1992 des ETSI (European Telecommunication Standards Institute) beschrieben und aus diesem bekannt.

Ein DECT-System erlaubt maximal 120 simultane Verbindungen zwischen sogenannten Basisstationen und Mobilteilen - darunter werden im übrigen nicht nur mobile Endgeräte sondern wie z.B. bei der drahtlosen Anschlußtechnik "Radio in the Local Loop" auch stationäre, mit einer Basisstation über Luftschnittstelle korrespondierende Systemkomponenten verstanden, die den Funktionsumfang eines Mobilteils beinhalten - ,wobei maximal 10 Frequenzen zwischen 1,88 und 1,90 GHz zur Verfügung stehen und pro Frequenz maximal 12 gleichzeitige Duplex-Sprachverbindungen (Zeitschlitze, Sprachkanäle) realisierbar sind.

Im DECT-Standard ist ferner eine Zusammenarbeit "Interworking" zwischen DECT und "ISDN" (Integrated Services Digital Network) spezifiziert. Daher sind neben den für Sprachverbindungen erforderlichen Zeitschlitzen (Kanäle) mit 32kbit/s ("Full Slots") und 8kbit/s ("Half Slots") auch, zur Unterstützung von ISDN vorgesehene, Zeitschlitze mit 64kbit/s Übertragungsrate spezifiziert.

Es sind allgemein Basisstationen und entsprechende Mobilteile bekannt, die zur schnelleren Datenübertragung von zum Beispiel 64kbit/s bzw. zur Unterstützung des DECT/ISDN-Interworking, Übertragungsraten von sowohl 32kbit/s "Full Slots" als auch 64kbit/s "Double Slots" unterstützen; also damit bis zu 6 Kanäle mit einer Übertragungsrate von 64kbits/s - d.h. maximal 2 vollständige ISDN-Verbindungen bestehend aus zwei Basiskanälen "B-Kanal" mit je 64kbit/s und einem Steuerkanal mit 16kbit/s "D-Kanal" - zur Verfügung stellen.

Diese Basistationen werden in bisher bestehende Schnurlos-Telekommunikations-, RLL- oder WLL-Systeme integriert. Dort wo Bedarf nach hohen Übertragungsraten, insbesondere zur Paketdatenübertragung, vorhanden ist, erfolgt diese Integration durch eine Substitution der Basisstationen, die nur Zeitschlitze von 32kbit/s zur Verfügung stellen, durch Basisstationen, die sowohl 32kbit/s Zeitschlitze (Full Slots) als auch 64kbit/s Zeitschlitze (Double Slots) unterstützen. Ein Problem, das bei dieser Vorgehensweise entsteht, ist die Tatsache, daß voll funktionsfähige Basisstationen aus bestehenden Netzwerken bzw. Funk-Telekommunikationssystemen entfernt werden, wobei deren Anschaffungskosten zum Teil noch nicht amortisiert sind.

Nach erfolgter Substitution ist grundsätzlich die Verfügbarkeit von "Full Slot"-Verbindungen und "Double Slot"-Verbindungen gewährleistet; jedoch kann bei einer hohen Anzahl bestehender "Full Slot"-Verbindungen der Fall auftreten, daß angeforderte "Double Slot"-Verbindungen nicht realisiert werden können, da durch die bestehenden "Full Slot"-Verbindungen die Bildung von Zeitschlitzen mit 64kbit/s Übertragungsrate (Double Slot) nicht möglich,ist. Kanäle für Dienste, insbesondere die Übertragung von Paketdaten, mit Bedarf von hohen Übertragungsraten, können in diesem Fall erst wieder zur Verfügung gestellt werden, wenn die Anzahl der bestehenden "Full Slot"-Verbindungen zurückgegangen ist.

Aus der US 4,748,681 ist ein Telekommunikationssystem bekannt, bei dem jeweils eine Basisstation in einer Funkzelle betrieben wird, wobei die Funkzellen jeweils eine Vielzahl unterschiedlicher Mobilteile, die unterschiedliche Dienste benötigen, aufweisen und wobei die Basisstation diese unterschiedlichen Dienste zumindest teilweise unterstützt und die unterstützten Dienste mittels einer Signalisierung den Mobilteilen bekannt gibt.

Der Erfindung liegt die Aufgabe zugrunde, ein Verfahren zur Steuerung der Aufteilung von Übertragungsraten in einem zellularen Funk-Telekommunikationssystem anzugeben, bei dem die in dem Funk-Telekommunikationssystem, insbesondere bei einem RLL- bzw. WLL-System, zur Verfügung stehenden, funktechnischen Übertragungsressourcen effektiv genutzt werden.

Diese Aufgabe wird durch die Merkmale des Patentanspruchs 1 gelöst.

Beim erfindungsgemäßen Verfahren - gemäß Anspruch 1 - werden in einem zellularen Telekommunikationssystem mit mindestens einer Funkzelle mit einer ersten Basisstation, die eine erste niedrige Übertragungsrate und eine zweite Übertragungsrate unterstützt, und mindestens einem Mobilteil zum Zwecke der Schnurlos-Telekommunikation, insbesondere nach dem TDMA-Prinzip, zusätzlich jeweils eine zweite Basisstation, die die erste Übertragungsrate unterstützt, innerhalb der Funkzelle installiert, wobei die zweite Basisstation in einer ersten Systeminformation die Unterstützung der ersten Übertragungsrate signalisiert und die erste Basisstation verkehrsabhängig die Unterstützung der zweiten oder der ersten und zweiten Übertragungsrate signalisiert.

Der wesentliche Vorteil des erfindungsgemäßen Verfahrens ist die Möglichkeit, die zweite Basisstation ausschließlich zur Realisierung von Verbindungen mit niedriger Übertragungsrate und die erste Basisstation überwiegend zur Realisierung von Verbindungen mit hoher Übertragungsrate zu verwenden, damit innerhalb der Funkzelle eine ausreichende Versorgung mit Zeitschlitzen hoher Übertragungsrate gewährleistet ist.

Bei der vorteilhaften Weiterbildung - gemäß Anspruch 2 - werden in einer Mobilstation, die sowohl die erste Übertragungsrate zur Bereitstellung des ersten Dienstes als auch eine zweite Übertragungsrate zur Bereitstellung des zweiten Dienstes unterstützt, zwei Listen geführt. Wird einer Mobilstation in der Systeminformation einer Basisstation signalisiert, daß diese den ersten Übertragungsmodus unterstützt, so werden aus der Systeminformation gewonnene, verbindungsrelevante Daten, insbesondere die Kennung der Basisstation, in einer ersten Liste gespeichert. Signalisiert die Basisstation der Mobilstation, daß sie den zweiten Übertragungsmodus unterstützt, so werden die verbindungsrelevanten Daten, insbesondere die Kennung der Basisstation in einer zweiten Liste gespeichert - Anspruch 2.

Der Vorteil dieser Weiterbildung ist die Durchführung einer Differenzierung der Basisstationen nach den bereitgestellten Diensten, um eine bessere Ausnutzung der zur Verfügung gestellten Dienste zu gewährleisten.

Ein wesentlicher Vorteil der Weiterbildung in Anspruch 3 (dezentrale verkehrsabhängige Steuerung) und Anspruch 4 (zentrale verkehrsabhängige Steuerung) ist die effiziente Nutzung der zur Verfügung gestellten Dienste, da die Basisstation, die Dienste mit hohen Übertragungsraten unterstützt, durch geeignete Signalisierung von Diensten mit niedrigen Übertragungsraten freigehalten wird.

Wesentlicher Vorteil der Weiterbildung nach Anspruch 5 ist durch einen Austausch der Telekommunikationsverbindung zwischen der ersten Basisstation und der Funkeinrichtung, die den ersten Dienst nutzt, mit einer äquivalenten Telekommunikationsverbindung zur zweiten Basisstation, die erste Basisstation für Telekommunikationsverbindungen, die den zweiten Dienst nutzen, freizuhalten.

Der wesentliche Vorteil der Weiterbildung nach Anspruch 6 ist eine zeitliche Stabilisierung des Verfahrens, da die mittels der Schwellwerte realisierte Hysterese ein ständiges Kippen der Systeminformation verhindert.

Der wesentliche Vorteil der Weiterbildung nach Anspruch 7 ist der dadurch ermöglichte Einsatz in einem DECT-System.

Der wesentliche Vorteil der Weiterbildung nach Anspruch 8 ist der dadurch ermöglichte Einsatz in einem GSM-System.

Der wesentliche Vorteil der Weiterbildung nach Anspruch 10 ist die einfache und kostengünstige Implementierung des Verfahrens, da der Telekommunikationsverbindungsaustausch ohne zusätzliche Messungen und Signalisierungen durchgeführt wird.

Der wesentliche Vorteil der Weiterbildung nach Anspruch 11 ist Steigerung der effektiven Ausnutzung von zur Verfügung gestellten Diensten, da durch die schnelle Durchführung des Telekommunikationsverbindungsaustausches die erste Basisstation schnell für Telekommunikationsverbindungen, die den zweiten Dienst mit der zweiten Übertragungsrate nutzen, freigemacht wird.

Weitere Vorteilhafte Ausgestaltungen der Erfindung sind in den restlichen Unteransprüchen angegeben.

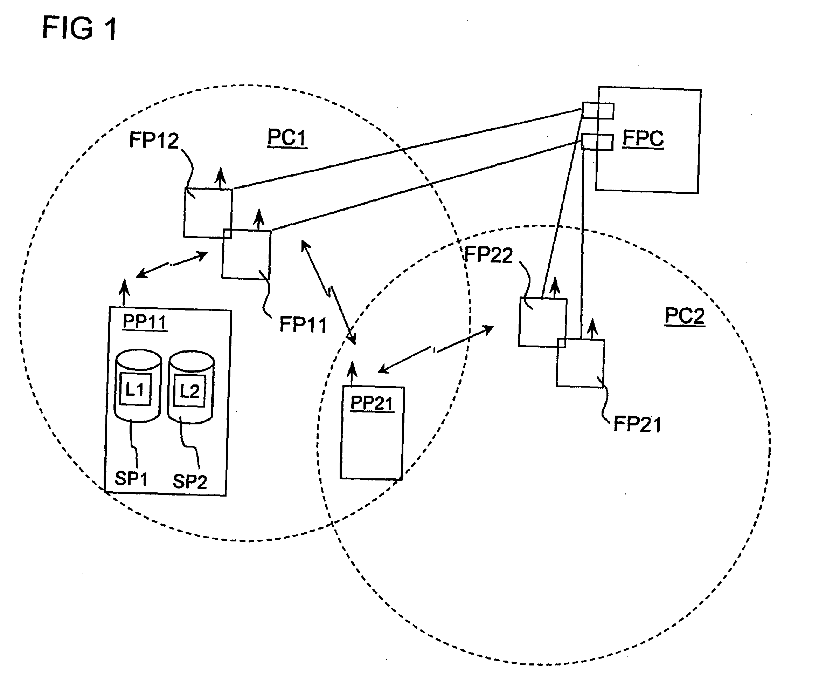

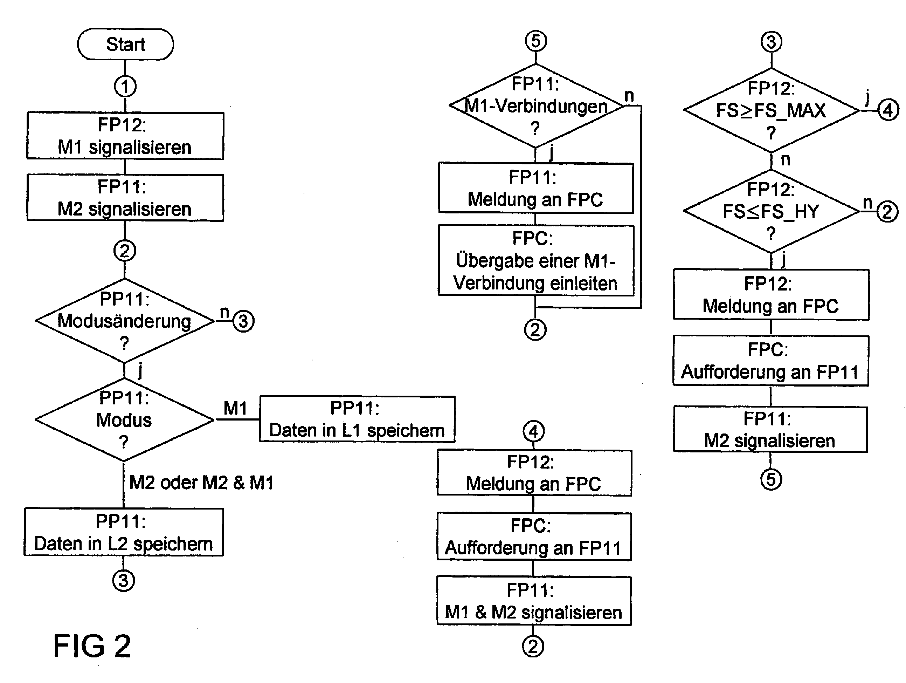

Ein Ausführungsbeispiel der Erfindung wird anhand der FIGUREN 1 und 2 erläutert. Dabei zeigen:
- FIGUR 1: zwei Funkzellen eines DECT-Systems mit jeweils einer Mobilstation und zwei Basisstationen und einer übergeordneten Steuereinheit,
- FIGUR 2: ein Flußdiagramm zur Steuerung, der verkehrsabhängigen Aufteilung der Übertragungsraten in Basisstationen in dem DECT-System nach FIGUR 1.

FIGUR 1 zeigt ein als DECT-System ausgebildetes Telekommunikationssystem mit als Pikozellen (Picocell) ausgebildeten Funkzellen PC1 und PC2. Die Übertragung von Informationen erfolgt jeweils über eine gemäß dem DECT-Standard ausgestaltete DECT-Luftschnittstelle, über welche durch eine Kombination von FDMA-, TDMA- und TDD-Zugriffsverfahren (Frequency Division Multiple Access / Time Division Multiple Access / Time Division Duplex) auf das drahtlose Übertragungsmedium "DECT-Funkkanal" zugegriffen wird. Hierbei stehen im Frequenzbereich zwischen 1880 MHz und 1900 MHz 10 Trägerfrequenzen mit einem Kanalabstand von jeweils 1,728 MHz zur Verfügung (FDMA), wobei der pro Träger festgelegte Zeitrahmen in 24 Zeitschlitze bzw. Kanäle - auch als "Slots" bezeichnet - eingeteilt ist (TDMA).

DECT-Festteile FP11, FP12, FP21, FP22 verwenden bei der Übertragung von Sprachdaten Zeitschlitze mit 32kbit/s übertragungsrate (Full Slot). Während Zeitschlitze mit einer Übertragungsrate von 64kbit/s (Double Slot) von jeweils ersten DECT-Festteilen FP11, FP21 vor allem zur Übertragung von Paketdaten verwendet werden. Ein erstes DECT-Mobilteil PP21 verwendet "Full Slots" zur Übertragung von Sprachdaten, wogegen ein zweites DECT-Mobilteil PP11 zur Sprachübertragung "Full Slots" und zur Übertragung von Paketdaten "Double Slots" verwendet. Das zweite DECT-Mobilteil PP11 speichert Datensätze von den DECT-Festteilen FP11, FP12, FP21, FP22, die "Full Slots" verwenden und den DECT-Festteilen FP11, FP21, die "Double Slots" verwenden in Form von separaten Listen L1, L2 in einen Speicher SP1, SP2 ab. Den Funkzellen PC1 und PC2 ist eine Steuereinheit FPC übergeordnet, die mit den DECT-Festteilen FP11, FP12, FP21, FP22 über eine Leitung verbunden ist, um sie verkehrsabhängig zu steuern.

Alternativ kann die Verbindung von DECT-Festteilen FP11, FP12, FP21, FP22 zur Steuereinheit FPC ebenfalls über die DECT-Luftschnittstelle realisiert werden.

Das DECT-System kann auch ohne Steuereinheit realisiert werden; d.h. die verkehrsabhängige Steuerung wird durch die Festteile FP11, FP12, FP21, FP22 realisiert.

Das in FIGUR 2 gezeigte Ablaufdiagramm verdeutlicht den Ablauf der verkehrsabhängigen Steuerung, die in dem DECT-System gemäß FIGUR 1 zwischen einem ersten DECT-Festteilen FP11, einem zweiten DECT-Festteil FP12, der übergeordneten Steuereinheit FPC und dem DECT-Mobilteil PP11 innerhalb der Pikozelle PC1, abhängig von einem Wert FS der Verkehrslast, den das zweite DECT-Festteil FP12 erfaßt hat, abläuft.

Im Ausgangszustand signalisiert das zweite Festteil FP12 dem zweiten Mobilteil PP11 in einer zweiten Systeminformation, daß es "Full Slots" unterstützt und das erste Festteil FP11 signalisiert dem zweiten DECT-Mobilteil PP11 in einer ersten Systeminformation, daß es "Double Slots" unterstützt. Die Signalisierung erfolgt beispielsweise jeweils durch das Setzen bzw. Zurücksetzen von Signalisierungsbits (Flags).

Ermittelt das zweite DECT-Mobilteil PP11 in der ersten Systeminformation aus dem gesetzten bzw. zurückgesetzten Signalisierungsbit, daß das erste DECT-Festteil FP11 einen Übertragungsmodus M2, d.h. Verwendung von "Double Slots" zur Ütragungsmodus M2, d.h. Verwendung von "Double Slots" zur Übertragung von beispielsweise Paketdaten, unterstützt, so speichert das zweite DECT-Mobilteil PP11 verbindungsrelevante Daten aus dieser Systeminformation, beispielsweise u.a. die Kennung des DECT-Festteils FP11, in Form einer ersten Liste L1 ab. Signalisiert das zweite DECT-Festteil FP12 dem den zweiten DECT-Mobilteil PP11 in der zweiten Systeminformation, daß es einen Übertragungsmodus M1, d.h. "Full Slots" zur Übertragung von Sprache, unterstützt, so speichert das zweite DECT-Mobilteil PP11 verbindungsrelevante Daten aus dieser Systeminformation, beispielsweise u.a. die Kennung des DECT-Festteils, in Form einer zweiten Liste L2 ab. Die Listen L1, L2 werden entsprechend einer Änderung der Systeminformationen aktualisiert.

Ist die Anzahl FS der von dem zweiten DECT-Festteil FP12 verwendeten "Full Slots" größer als oder gleich einem ersten Schwellwert FS_MAX, der zusammen mit einem zweiten Schwellwert FS_HY z.B. zentral in einem Informations- und Operationszentrum oder dezentral in den betreffenden DECT-Festeilen FP11, FP21 festgelegt wird, so sendet das zweite DECT-Festteil FP12 der Steuereinheit FPC eine erste Signalisierungsinformation. Daraufhin wird das erste DECT-Festteil FP11 von der übergeordneten Steuereinheit FPC derart gesteuert, daß es in der ersten, an das in der Funkzelle PC1 gelegene zweite DECT-Mobilteil PP11 gerichteten, Systeminformation signalisiert, daß es sowohl "Full Slots" als auch "Double Slots" unterstützt. Nach Empfang dieser Systeminformation aktualisiert das zweite DECT-Mobilteil PP11 ihre Liste(n) L1, L2.

Ist die Anzahl FS kleiner als der erste Schwellwert FS_MAX, so wird durch das zweite DECT-Festteil FP12 überprüft, ob die Anzahl FS den zweiten Schwellwert FS_HY unterschreitet. Trifft das zu, so sendet das zweite DECT-Festteil FP12 eine zweite Signalisierungsinformation an die übergeordnete Steuereinheit FPC. Daraufhin wird das erste DECT-Festteil FP11 von der übergeordneten Steuereinheit FPC derart gesteuert, daß es dem zweiten Mobilteil PP11 die Unterstützung von "Double Slots" signalisiert. Nach Empfang dieser Systeminformation aktualisiert das zweite DECT-Mobilteil PP11 gegebenenfalls die Listen L1, L2. Außerdem fordert die Steuereinheit FPC das erste DECT-Festteil FP11 auf, die Anzahl der bestehenden "Full Slot"-Verbindungen (Übertragungsmodus M1) zwischen erstem DECT-Festteil FP11 und den DECT-Mobilteilen PP11, PP21 zu ermitteln und - falls existent - zu melden. Existiert mindestens eine "Full Slot"-Verbindung, dann kann von der Steuereinheit FPC mittels der zweiten DECT-Mobilstation PP11 die Übergabe ("Handover") einer "Full Slot"-Verbindung vom ersten DECT-Festteil FP11 zum zweiten DECT-Festteil FP12 initiiert werden.

Wird der zweite Schwellwert FS_HY nicht unterschritten oder existiert keine "Full Slot"-Verbindung zwischen erstem DECT-Festteil FP11 und zweitem DECT-Mobilteil PP11, so werden nur gegebenenfalls die Listen L1, L2 des zweiten DECT-Mobilteils aktualisiert und das Verfahren beginnt mit der aktuellen Anzahl FS von neuem.

Alternativ zur zentralen Steuerung durch die Steuereinheit FPC kann, wie bereits bei FIGUR 1 beschrieben, die verkehrsabhängige Steuerung auch durch die DECT-Festteile FP11, FP12, FP21, FP22 durchgeführt werden. Wobei die jeweils zweiten DECT-Festteile FP12, FP22 den aktuellen Wert der Anzahl FS ermitteln, die Schwellwertvergleiche vornehmen und die Ergebnisse den jeweils ersten DECT-Festteilen FP11, FP21 signalisieren und die jeweils ersten DECT-Festteile FP11, FP21 die entsprechenden Übertragungsmodi den DECT-Mobilteilen PP11, PP21 signalisieren und gegebenenfalls eine Verbindungsübergabe ("Handover") initiieren.

Alternativ zu der vorher beschriebenen iterativen - jeweils nur eine "Full Slot"-Verbindung - Übergabeprozedur können mehrere "Full Slot"-Verbindungen in einem Schritt übergeben werden, jedoch ist die Anzahl der Verbindungen so begrenzt, daß durch die Übergabe der erste Schwellwert FS_MAX nicht erreicht bzw. überschritten wird.

## Patentansprüche

1. Verfahren zur Steuerung der Aufteilung von Übertragungsraten in einem zellularen Funk-Telekommunikationssystem mit folgenden Merkmalen:
a) In mindestens einer Funkzelle (PC1; PC2) des Funk-Telekommunikationssystems werden jeweils mindestens zwei Basisstationen (FP11, FP12; FP21, FP22) und mindestens eine Funkeinrichtung (PP11; PP12) zum Zwecke der drahtlosen Telekommunikation betrieben,
b) eine erste Basisstation (FP11; FP21) unterstützt einen ersten Übertragungsmodus (M1), in dem ein erster Dienst mit einer ersten Übertragungsrate übertragen wird, und einen zweiten Übertragungsmodus (M2), in dem ein zweiter Dienst mit einer zweiten Übertragungsrate übertragen wird,
c) eine zweite Basisstation (FP12; FP22) unterstützt den ersten Übertragungsmodus (M1), in dem der erste Dienst mit der ersten Übertragungsrate übertragen wird,
d) die erste Basisstation (FP11; FP21) signalisiert der Funkeinrichtung (PP11; PP21) abhängig von einer Verkehrsbelastung der zweiten Basisstation (FP12; FP22) in einer ersten Systeminformation, daß sie den zweiten Übertragungsmodus (M2) oder den ersten Übertragungsmodus (M1) und zweiten Übertragungsmodus (M2) unterstützt,
e) die zweite Basisstation (FP12; FP22) signalisiert der Funkeinrichtung (PP11; PP21) in einer zweiten Systeminformation, daß sie den ersten Übertragungsmodus (M1) unterstützt.

2. Verfahren nach Anspruch 1,
**dadurch gekennzeichnet,daß**
a) die Funkeinrichtung (PP11; PP21) den ersten Übertragungsmodus (M1), in dem der erste Dienst mit der ersten Übertragungsrate übertragen wird, und den zweiten Übertragungsmodus (M2), in dem der zweite Dienst mit der zweiten Übertragungsrate übertragen wird, unterstützt,
b) die Funkeinrichtung (PP11; PP21) verbindungsrelevante Daten in mindestens einem Speicher (SP1, SP2) speichert,
c) die Funkeinrichtung (PP11; PP21) Primärdatensätze in Form einer ersten Liste (L1) in den Speicher (SP1, SP2) speichert, wenn die Basisstationen (FP11, FP12, FP21, FP22) in der Systeminformation signalisieren, daß sie den ersten Übertragungsmodus (M1) unterstützen,
d) die Funkeinrichtung (PP11; PP21) Sekundärdatensätze in Form einer zweiten Liste (L2) in den Speicher (SP1, SP2) speichert, wenn die Basisstationen (FP11, FP12, FP21, FP22) in der Systeminformation signalisieren, daß sie den zweiten Übertragungsmodus (M2)unterstützen,
e) die Funkeinrichtung (PP11; PP21) bei Änderung der Systeminformationen der Basisstationen (FP11, FP12, FP21, FP22) die erste Liste (L1) und die zweite Liste (L2) aktualisiert.

3. Verfahren nach Anspruch 1 oder 2,
**dadurch gekennzeichnet, daß**
a) die zweite Basisstation (FP12; FP22) einen Wert (FS) der aktuellen Auslastung mit Schwellwerten (FS_MAX, FS_HY) vergleicht,
b) die zweite Basisstation (FP12, FP22) der ersten Basisstation (FP11, FP21) eine erste Signalisierungsinformation sendet, wenn der Wert (FS) der aktuellen Auslastung größer oder gleich einem ersten Schwellwert (FS_MAX) ist,
c) die zweite Basisstation (FP12, FP22) der ersten Basisstation (FP11, FP21) eine zweite Signalisierungsinformation sendet, wenn der Wert (FS) der aktuellen Auslastung kleiner oder gleich einem zweiten Schwellwert (FS_HY) ist,
d) die erste Basisstation (FP11; FP21) zwischen dem Empfang der ersten und der zweiten Signalisierungsinformation der Funkeinrichtung (PP11; PP21) in der ersten Systeminformation signalisiert, daß sie den ersten Übertragungsmodus (M1) und den zweiten Übertragungsmodus (M2) unterstützt,
e) die erste Basisstation (FP11; FP21) zwischen dem Empfang der zweiten und der ersten Signalisierungsinformation der Funkeinrichtung (PP11 ; PP21) in der ersten Systeminformation signalisiert, daß sie den zweiten Übertragungsmodus (M2) oder den ersten Übertragungsmodus (M1) und den zweiten Übertragungsmodus (M2) unterstützt.

4. Verfahren nach Anspruch 1 oder 2,
**dadurch gekennzeichnet, daß**
a) die zweite Basisstation (FP12; FP22) einen Wert (FS) der aktuellen Auslastung mit Schwellwerten (FS_MAX, FS_HY) vergleicht,
b) die zweite Basisstation (FP12, FP22) einer übergeordneten Steuereinheit (FPC) eine erste Signalisierungsinformation sendet, wenn der Wert (FS) der aktuellen Auslastung größer oder gleich einem ersten Schwellwert (FS_MAX) ist,
c) die zweite Basisstation (FP12, FP22) der übergeordneten Steuereinheit (FPC) eine zweite Signalisierungsinformation sendet, wenn der Wert (FS) der aktuellen Auslastung kleiner oder gleich einem zweiten Schwellwert (FS_HY) ist,
d) zwischen dem Empfang der ersten und der zweiten Signalisierungsinformation durch die Steuereinheit (FPC) diese die erste Basisstation (FP11; FP21) derart steuert, daß diese der Funkeinrichtung (PP11; PP21) in der ersten Systeminformation signalisiert, daß sie den ersten übertragungsmodus (M1) und den zweiten Übertragungsmodus (M2) unterstützt,
e) zwischen dem Empfang der zweiten und der ersten Signalisierungsinformation durch die Steuereinheit (FPC) diese die erste Basisstation (FP11; FP21) derart steuert, daß diese der Funkeinrichtung (PP11; PP21) in der ersten Systeminformation signalisiert, daß sie den zweiten Übertragungsmodus (M2) oder den ersten Übertragungsmodus (M1) und zweiten Übertragungsmodus (M2) unterstützt.

5. Verfahren nach Anspruch 3 oder 4,
**dadurch gekennzeichnet,daß**
Telekommunikationsverbindungen zwischen den Funkeinrichtungen (PP11; PP21) und der ersten Basisstation (FP11; FP21), bei denen der erste Übertragungsmodus (M1) genutzt wird, im Sinne eines "Handover" durch entsprechende Telekommunikationsverbindungen zwischen den Funkeinrichtungen (PP11, PP21) und der zweiten Basisstation (FP12, FP22) ausgetauscht werden.

6. Verfahren nach Anspruch 5,
**dadurch gekennzeichnet,daß**
a) der Austausch der Telekommunikationsverbindungen ab Empfang der zweiten Signalisierungsinformation durchgeführt wird,
b) der Austausch der Telekommunikationsverbindungen automatisch durchgeführt wird,
c) der Austausch der Telekommunikationsverbindungen spätestens nach Empfang der ersten Signalisierungsinformation beendet wird.

7. Verfahren nach Anspruch 6,
**dadurch gekennzeichnet, daß**
a) die Funkeinrichtung (PP11, PP21) den Austausch der Telekommunikationsverbindungen initiiert,
b) die Funkeinrichtung (PP11, PP21) den Austausch der Telekommunikationsverbindungen vornimmt.

8. Verfahren nach Anspruch 6,
**dadurch gekennzeichnet,daß**
a) die übergeordnete Steuereinheit (FPC) den Austausch Telekommunikationsverbindungen initiiert,
b) die übergeordnete Steuereinheit (FPC) den Austausch Telekommunikationsverbindungen vornimmt.

9. Verfahren nach Anspruch 6,
**dadurch gekennzeichnet, daß**
a) die Basisstation (FP11, FP12, FP21, FP22) den Austausch der Telekommunikationsverbindungen initiiert,
b) die Basisstation (FP11, FP12, FP21, FP22) den Austausch der Telekommunikationsverbindungen vornimmt.

10. Verfahren nach einem der Ansprüche 5 bis 7,
**dadurch gekennzeichnet, daß**
der Austausch der Telekommunikationsverbindungen als iterativer Prozeß stattfindet.

11. Verfahren nach einem der Ansprüche 5 bis 8,
**dadurch gekennzeichnet, daß**
a) der ersten Basisstation (FP11, FP21) eine Anzahl der Verbindungen signalisiert wird, die die zweite Basisstation (FP11, FP21) übernehmen kann ohne den ersten Schwellwert (FS_MAX) zu überschreiten,
b) die erste Basisstation (FP11, FP21) der zweiten Basisstation (FP12, FP22) höchstens diese Anzahl von Verbindungen in einem Schritt übergibt.

12. Verfahren nach Anspruch 10,
**dadurch gekennzeichnet, daß**
die zweite Basisstation (FP12, FP22) der ersten Basisstation (FP11, FP21) die Anzahl der Verbindungen signalisiert.

13. Verfahren nach Anspruch 10,
**dadurch gekennzeichnet, daß**
a) die zweite Basisstation (FP12, FP22) der Steuereinheit (FPC) die Anzahl der Verbindungen signalisiert,
b) die Steuereinheit (FPC) daraufhin der ersten Basisstation die Anzahl der Verbindungen signalisiert.

14. Verfahren nach einem der Ansprüche 3 bis 12,
**dadurch gekennzeichnet, daß**
der Betrag des zweiten Schwellwerts (FS_HY) gleich dem Betrag des ersten Schwellwerts (FS_MAX) ist.

15. Verfahren nach einem der Ansprüche 3 bis 12,
**dadurch gekennzeichnet, daß**
der Betrag des zweiten Schwellwerts (FS_HY) kleiner dem Betrag des ersten Schwellwerts (FS_MAX) ist.

16. Verfahren nach einem der vorhergehenden Ansprüche,
**dadurch gekennzeichnet, daß**
bei der ersten Übertragungsrate Signale mit 32kbit/s und bei der zweiten Übertragungsrate Signale mit 64kbit/s übertragen werden.

17. Verfahren nach einem der vorhergehenden Ansprüche,
**dadurch gekennzeichnet, daß**
beim ersten Dienst Sprache und beim zweiten Dienst Paketdaten übertragen werden.

18. Verfahren nach einem der vorhergehenden Ansprüche,
**dadurch gekennzeichnet, daß**
die Funkeinrichtung (PP11, PP21) eine drahtlose Mobilstation ist.

19. Verfahren nach einem der vorhergehenden Ansprüche,
**dadurch gekennzeichnet, daß**
die Funkeinrichtung (PP11, PP21) eine drahtlose Netzabschlußeinheit "Radio Network Termination" RNT ist.

20. Verfahren nach einem der vorhergehenden Ansprüche,
**dadurch gekennzeichnet,daß**
das Funk-Telekommunikationssystem nach dem DECT-Standard funktioniert.

## Claims

1. Method for controlling the distribution of transmission rates in a cellular radiotelecommunication system, having the following features:
a) In at least one radio cell (PC1; PC2) of the radiotelecommunication system, in each case at least two fixed parts (FP11, FP12; FP21, FP22) and at least one portable part (PP11; PP12) are operated for purposes of wireless telecommunication,
b) a first fixed part (FP11; FP21) supports a first transmission mode (M1) in which a first service is transmitted at a first transmission rate, and a second transmission mode (M2) in which a second service is transmitted at a second transmission rate,
c) a second fixed part (FP12; FP22) supports the first transmission mode (M1) in which the first service is transmitted at the first transmission rate,
d) the first fixed part (FP11; FP21) signals to the portable part (PP11; PP21), in dependence on the traffic load carried by the second fixed part (FP12; FP22), in a first system information item that it supports the second transmission mode (M2) or the first transmission mode (M1) and second transmission mode (M2),
e) the second fixed part (FP12; FP22) signals to the portable part (PP11; PP21) in a second system information item that it supports the first transmission mode (M1).

2. Method according to claim 1, **characterized in that**
a) the portable part (PP11; PP21) supports the first transmission mode (M1) in which the first service is transmitted at the first transmission rate, and the second transmission mode (M2) in which the second service is transmitted at the second transmission rate,
b) the portable part (PP11; PP21) stores connection-related data in at least one memory (SP1, SP2),
c) the portable part (PP11; PP21) stores primary data records in the form of a first list (L1) in the memory (SP1, SP2) when the fixed parts (FP11, FP12, FP21, FP22) signal in the system information item that they support the first transmission mode (M1),
d) the portable part (PP11; PP21) stores secondary data records in the form of a second list (L2) in the memory (SP1, SP2) when the fixed parts (FP11, FP12, FP21, FP22) signal in the system information item that they support the second transmission mode (M2),
e) the portable part (PP11; PP21) updates the first list (L1) and the second list (L2) in the case of a change in the system information from the fixed parts (FP11, FP12, FP21, FP22).

3. Method according to claim 1 or 2, **characterized in that**
a) the second fixed part (FP12; FP22) compares value (FS) of the current capacity utilization with threshold values (FS_MAX, FS_HY),
b) the second fixed part (FP12, FP22) sends to the first fixed part (FP11, FP21) a first signaling information item when the value (FS) of the current capacity utilization is greater than or equal to a first threshold value (FS_MAX),
c) the second fixed part (FP12, FP22) sends to the first fixed part (FP11, FP21) a second signaling information item when the value (FS) of the current capacity utilization is less than or equal to a second threshold value (FS_HY),
d) the first fixed part (FP11; FP21) signals, between receiving the first and the second signaling information items, to the portable part (PP11; PP21) in the first system information item that it supports the first transmission mode (M1) and the second transmission mode (M2),
e) the first fixed part (FP11; FP21) signals, between receiving the second and first signaling information items, to the portable part (PP11; PP21) in the first system information item that it supports the second transmission mode (M2) or the first transmission mode (M1) and the second transmission mode (M2).

4. Method according to claim 1 or 2, **characterized in that**
a) the second fixed part (FP12; FP22) compares a value (FS) of the current capacity utilization with threshold values (FS_MAX, FS_HY),
b) the second fixed part (FP12, FP22) sends to a higher-level controller (FPC) a first signaling information item when the value (FS) of the current capacity utilization is greater than or equal to a first threshold value (FS_MAX),
c) the second fixed part (FP12, FP22) sends to the higher-level controller (FPC) a second signaling information item when the value (FS) of the current capacity utilization is less than or equal to a second threshold value (FS_HY),
d) the controller (FPC), between receiving the first and the second signaling information items, controls the first fixed part (FP11; FP21) in such a manner that it signals to the portable part (PP11; PP21) in the first system information item that it supports the first transmission mode (M1) and the second transmission mode (M2),
e) the controller (FPC), between receiving the second and the first signaling information items, controls the first fixed part (FP11; FP21) in such a manner that it signals to the portable part (PP11; PP21) in the first system information item that it supports the second transmission mode (M2) or the first transmission mode (M1) and second transmission mode (M2).

5. Method according to claim 3 or 4, **characterized in that** telecommunication connections between the portable parts (PP11; PP21) and the first fixed part (FP11; FP21), in which the first transmission mode (M1) is used, are exchanged in the sense of a handover by corresponding telecommunication connections between the portable parts (PP11, PP21) and the second fixed part (FP12, FP22).

6. Method according to claim 5, **characterized in that**
a) the telecommunication connections are exchanged when the second signaling information item is received,
b) the telecommunication connections are exchanged automatically,
c) the exchange of telecommunication connections is ended at the latest after the first signaling information item has been received.

7. Method according to claim 6, **characterized in that**
a) the portable part (PP11, PP21) initiates the exchange of telecommunication connections,
b) the portable part (PP11, PP21) exchanges the telecommunication connections.

8. Method according to claim 6, **characterized in that**
a) the higher-level controller (FPC) initiates the exchange of telecommunication connections,
b) the higher-level controller (FPC) exchanges telecommunication connections.

9. Method according to claim 6, **characterized in that**
a) the fixed part (FP11, FP12, FP21, FP22) initiates the exchange of telecommunication connections,
b) the fixed part (FP11, FP12, FP21, FP22) exchanges the telecommunication connections.

10. Method according to one of claims 5 to 7, **characterized in that** the telecommunication connections are exchanged in an iterative process.

11. Method according to one of claims 5 to 8, **characterized in that**
a) a number of connections which can be handed over to the second fixed part (FP11, FP21) without exceeding the first threshold value (FS_MAX) is signaled to the first fixed part (FP11, FP21),
b) the first fixed part (FP11, FP21) hands over, at the most, this number of connections in one step to the second fixed part (FP12, FP22).

12. Method according to claim 10, **characterized in that** the second fixed part (FP12, FP22) signals the number of connections to the first fixed part (FP11, FP21).

13. Method according to claim 10, **characterized in that**
a) the second fixed part (FP12, FP22) signals the number of connections to the controller (FPC),
b) the controller (FPC) thereupon signals the number of connections to the first fixed part.

14. Method according to one of claims 3 to 12, **characterized in that** the absolute value of the second threshold value (FS_HY) is equal to the absolute value of the first threshold value (FS_MAX).

15. Method according to one of claims 3 to 12, **characterized in that** the absolute value of the second threshold value (FS_HY) is smaller than the absolute value of the first threshold value (FS_MAX).

16. Method according to one of the preceding claims, **characterized in that** signals are transmitted at 32 kbit/s in the case of the first transmission rate and at 64 kbit/s in the case of the second transmission rate.

17. Method according to one of the preceding claims, **characterized in that** voice is transmitted in the case of the first service and packet data are transmitted in the case of the second service.

18. Method according to one of the preceding claims, **characterized in that** the portable part (PP11, PP21) is a wireless portable part.

19. Method according to one of the preceding claims, **characterized in that** the portable part (PP11, PP21) is a wireless radio network termination RNT.

20. Method according to one of the preceding claims, **characterized in that** the radiotelecommunication system operates in accordance with the DECT standard.

## Revendications

1. Procédé de commande de la répartition de débits de transmission dans un système de télécommunication radio cellulaire, avec les caractéristiques suivantes:
a) respectivement au moins deux stations de base (FP11, FP12; FP21, FP22) et au moins un dispositif radio (PP11, PP12) sont exploités dans au moins une cellule radio (PC1; PC2) du système de télécommunication radio aux fins de la télécommunication sans fil,
b) une première station de base (FP11; FP21) supporte un premier mode de transmission (M1) dans lequel un premier service est transmis avec un premier débit de transmission et un deuxième mode de transmission (M2) dans lequel un deuxième service est transmis avec un deuxième débit de transmission,
c) une deuxième station de base (FP12; FP22) supporte le premier mode de transmission (M1) dans lequel le premier service est transmis avec le premier débit de transmission,
d) la première station de base (FP11; FP21) signale au dispositif radio (PP11; PP21), en fonction d'une charge de trafic de la deuxième station de base (FP12; FP22), dans une première information système, qu'elle supporte le deuxième mode de transmission (M2) ou le premier mode de transmission (M1) et le deuxième mode de transmission (M2),
e) la deuxième station de base (FP12; FP22) signale au dispositif radio (PP11; PP21), dans une deuxième information système, qu'elle supporte le premier mode de transmission (M1).

2. Procédé selon la revendication 1, **caractérisé en ce que**
a) le dispositif radio (PP11; PP21) supporte le premier mode de transmission (M1) dans lequel le premier service est transmis avec le premier débit de transmission et le deuxième mode de transmission (M2) dans lequel le deuxième service est transmis avec le deuxième débit de transmission,
b) le dispositif radio (PP11; PP21) met en mémoire des données pertinentes pour les liaisons dans au moins une mémoire (SP1, SP2),
c) le dispositif radio (PP11; PP21) met en mémoire des jeux de données primaires sous la forme d'une première liste (L1) dans la mémoire (SP1, SP2) si les stations de base (FP11, FP12, FP21, FP22) signalent, dans l'information système, qu'elles supportent le premier mode de transmission (M1),
d) le dispositif radio (PP11; PP21) met en mémoire des jeux de données secondaires sous la forme d'une deuxième liste (L2) dans la mémoire (SP1, SP2) si les stations de base (FP11, FP12, FP21, FP22) signalent, dans l'information système, qu'elles supportent le deuxième mode de transmission (M2),
e) le dispositif radio (PP11; PP21) met à jour la première liste (L1) et la deuxième liste (L2) en cas de modification des informations système des stations de base (FP11, FP12, FP21, FP22).

3. Procédé selon la revendication 1 ou 2, **caractérisé en ce que**
a) la deuxième station de base (FP12; FP22) compare une valeur (FS) de l'utilisation actuelle avec des valeurs seuils (FS_MAX, FS_HY),
b) la deuxième station de base (FP12, FP22) envoie une première information de signalisation à la première station de base (FP11, FP21) si la valeur (FS) de l'utilisation actuelle est supérieure ou égale à une première valeur seuil (FS_MAX),
c) la deuxième station de base (FP12, FP22) envoie une deuxième information de signalisation à la première station de base (FP11, FP21) si la valeur (FS) de l'utilisation actuelle est inférieure ou égale à une deuxième valeur seuil (FS_HY),
d) la première station de base (FP11; FP21) signale, entre la réception de la première et de la deuxième information de signalisation du dispositif radio (PP11; PP21), dans la première information système, qu'elle supporte le premier mode de transmission (M1) et le deuxième mode de transmission (M2),
e) la première station de base (FP11; FP21) signale, entre la réception de la deuxième et de la première information de signalisation du dispositif radio (PP11; PP21), dans la première information système, qu'elle supporte le deuxième mode de transmission (M2) ou le premier mode de transmission (M1) et le deuxième mode de transmission (M2).

4. Procédé selon la revendication 1 ou 2, **caractérisé en ce que**
a) la deuxième station de base (FP12; FP22) compare une valeur (FS) de l'utilisation actuelle avec des valeurs seuils (FS_MAX, FS_HY),
b) la deuxième station de base (FP12, FP22) envoie une première information de signalisation à une unité de commande hiérarchiquement supérieure (FPC) si la valeur (FS) de l'utilisation actuelle est supérieure ou égale à une première valeur seuil (FS_MAX),
c) la deuxième station de base (FP12, FP22) envoie une deuxième information de signalisation à l'unité de commande hiérarchiquement supérieure (FPC) si la valeur (FS) de l'utilisation actuelle est inférieure ou égale à une deuxième valeur seuil (FS_HY),
d) entre la réception de la première et de la deuxième information de signalisation par l'unité de commande (FPC), celle-ci commande la première station de base (FP11; FP21) de manière telle que celle-ci signale au dispositif radio (PP11; PP21), dans la première information système, qu'elle supporte le premier mode de transmission (M1) et le deuxième mode de transmission (M2),
e) entre la réception de la deuxième et de la première information de signalisation par l'unité de commande (FPC), celle-ci commande la première station de base (FP11; FP21) de manière telle que celle-ci signale au dispositif radio (PP11; PP21), dans la première information système, qu'elle supporte le deuxième mode de transmission (M2) ou le premier mode de transmission (M1) et le deuxième mode de transmission (M2).

5. Procédé selon la revendication 3 ou 4, **caractérisé en ce que** des liaisons de télécommunication entre les dispositifs radio (PP11; PP21) et la première station de base (FP11; FP21), dans le cas desquelles le premier mode de transmission (M1) est utilisé, sont remplacées, au sens d'un transfert (handover), par des liaisons de télécommunication correspondantes entre les dispositifs radio (PP11, PP21) et la deuxième station de base (FP12, FP22).

6. Procédé selon la revendication 5, **caractérisé en ce que**
a) la substitution des liaisons de télécommunication est effectuée à compter de la réception de la deuxième information de signalisation,
b) la substitution des liaisons de télécommunication est effectuée automatiquement,
c) la substitution des liaisons de télécommunication se termine au plus tard après la réception de la première information de signalisation.

7. Procédé selon la revendication 6, **caractérisé en ce que**
a) le dispositif radio (PP11, PP21) initialise la substitution des liaisons de télécommunication,
b) le dispositif radio (PP11, PP21) opère la substitution des liaisons de télécommunication.

8. Procédé selon la revendication 6, **caractérisé en ce que**
a) l'unité de commande hiérarchiquement supérieure (FPC) initialise la substitution des liaisons de télécommunication,
b) l'unité de commande hiérarchiquement supérieure (FPC) opère la substitution des liaisons de télécommunication.

9. Procédé selon la revendication 6, **caractérisé en ce que**
a) la station de base (FP11, FP12, FP21, FP22) initialise la substitution des liaisons de télécommunication,
b) la station de base (FP11, FP12, FP21, FP22) opère la substitution des liaisons de télécommunication.

10. Procédé selon l'une des revendications 5 à 7, **caractérisé en ce que** la substitution des liaisons de télécommunication a lieu en tant que processus itératif.

11. Procédé selon l'une des revendications 5 à 8, **caractérisé en ce que**
a) est signalé à la première station de base (FP11, FP21) un nombre des liaisons que la deuxième station de base (FP11, FP21) peut prendre en charge sans dépasser la première valeur seuil (FS_MAX),
b) la première station de base (FP11, FP21) transfère au maximum ce nombre de liaisons à la deuxième station de base (FP12, FP22) en une étape.

12. Procédé selon la revendication 10, **caractérisé en ce que** la deuxième station de base (FP12, FP22) signale le nombre des liaisons à la première station de base (FP11, FP21).

13. Procédé selon la revendication 10, **caractérisé en ce que**
a) la deuxième station de base (FP12, FP22) signale le nombre des liaisons à l'unité de commande (FPC),
b) l'unité de commande (FPC) signale ensuite le nombre des liaisons à la première station de base.

14. Procédé selon l'une des revendications 3 à 12, **caractérisé en ce que** la grandeur de la deuxième valeur seuil (FS_HY) est égale à la grandeur de la première valeur seuil (FS_MAX).

15. Procédé selon l'une des revendications 3 à 12, **caractérisé en ce que** la grandeur de la deuxième valeur seuil (FS_HY) est inférieure à la grandeur de la première valeur seuil (FS_MAX).

16. Procédé selon l'une des revendications précédentes, **caractérisé en ce que** sont transmis, dans le cas du premier débit de transmission, des signaux à 32kbits/s et, dans le cas du deuxième débit de transmission, des signaux à 64 kbits/s.

17. Procédé selon l'une des revendications précédentes, **caractérisé en ce que** sont transmis la voix dans le cas du premier service et des données en paquets dans le cas du deuxième service.

18. Procédé selon l'une des revendications précédentes, **caractérisé en ce que** le dispositif radio (PP11, PP21) est une station mobile sans fil.

19. Procédé selon l'une des revendications précédentes, **caractérisé en ce que** le dispositif radio (PP11, PP21) est une unité de terminaison de réseau sans fil «Radio Network Termination» RNT.

20. Procédé selon l'une des revendications précédentes, **caractérisé en ce que** le système de télécommunication radio fonctionne selon le standard DECT.
